# EUROPEAN PATENT SPECIFICATION

(11) **EP 2 440 063 B1**
(45) Date of publication and mention of the grant of the patent: **19.04.2017**
(21) Application number: 10723119.3
(22) Date of filing: 07.06.2010
(51) Int. Cl.: A22C 11/12

(54) **TYING ASSEMBLY AND METHOD**
KNOTMASCHINE UND ENTSPRECHENDES VERFAHREN
DISPOSITIF ET PROCÉDÉ DE NOUAGE

(30) Priority: 10.06.2009 IT BO20090378
(43) Date of publication of application: 18.04.2012
(73) Proprietor: Automatica Di Di Stefano Cinzia, 66034 Lanciano (IT)
(72) Inventor: DI STEFANO, Cinzia, I-66034 Lanciano (IT)
(74) Representative: Cutropia, Gianluigi
(86) International application number: PCT/EP2010/057925
(87) International publication number: WO 2010/142640

(56) References cited:
- EP-A- 0 570 253
- FR-A- 2 576 751
- FR-A- 2 627 455
- US-A- 4 188 053
- US-A- 4 541 660

## Description

### Technical field

The present invention relates to a tying assembly.

### Background Art

Currently, automatic and semiautomatic machines are commonly commercially available which can tie sausages by knotting the twine that tightens the protruding flap of the casing, which in turn contains the food product (salami or others).

In order to perform this task, these machines, substantially of the pneumatic type, use a series of pneumatic components (actuators, electric valves, sensors, logic elements, et cetera) that manage a plurality of mechanical movement systems that involve arms, lever systems, cams and more.

Providing the knot thus involves the perfect coordination of a considerable number of elements, which operate synchronously and/or in sequence in order to obtain, through a long series of elementary operations, the knot of the desired type tightened around the casing.

This solution, however, is not free from drawbacks.

The presence of this considerable number of elements imposes limitations to the productivity that can be achieved by the machine; first of all, in fact, it is evident that the overall cycle time is linked directly to the number of movements in sequence performed by the various components listed above and is thus tied to the duration of each step.

Therefore, in order to reduce the overall cycle time it is necessary to shorten the execution times of each operation, often subjecting to excessive stress the parts involved, with the risk of great wear and/or breakages.

It should also be noted that the speed with which the various parts can operate often has an upper limit, because it is subjected to physical or mechanical constraints that accordingly do not allow to reduce at will the specific cycle time.

Moreover, the presence of several elements increases inevitably the risk of breakages and stops, with obviously negative consequences on the efficiency of the assembly and/or of the operating and maintenance costs.

Moreover, these breakages and stops can often be caused not only by the malfunctioning of individual parts but also by imperfect synchronizations among the various components, because even small delays or variations with respect to the ideal cycle can jeopardize coordination with the other components, thereby reducing further the overall efficiency of the machine.

### Disclosure of the Invention

The aim of the present invention is to solve the drawbacks described above, by providing a tying assembly that has a high structural simplicity.

Within this aim, an object of the invention is to provide a tying assembly that is capable of ensuring high productivity and efficiency.

Another object of the invention is to provide a tying assembly that allows to perform additional functions on the product.

Another object of the invention is to provide a tying assembly that ensures high reliability in operation.

Another object of the invention is to provide a tying assembly that allows to vary the type of knot that is formed by applying a limited number of modifications to the machine.

Another object of the invention is to provide a tying assembly that can be obtained easily starting from commonly commercially available elements and materials.

Another object of the invention is to provide a tying assembly that has low costs and is safe in application.

This aim and these and other objects which will become better apparent hereinafter are achieved by a tying assembly, arranged along a line for the processing of substantially elongated products wrapped in a sheath, comprising at least one dispenser of twine, adapted for tying at least one protruding flap of the sheath, and a slider for sending the product wrapped in the sheath to a processing station connected to said dispenser, characterized in that said processing station comprises at least one compartment for accommodating the product and a pneumatic circuit, adapted for entraining the twine and consequently bending it around said compartment, in order to form and tighten a knot around the protruding flap of the sheath.

### Brief description of the drawings

Further characteristics and advantages of the invention will become better apparent from the following detailed description of a preferred but not exclusive embodiment of the tying assembly according to the invention, illustrated by way of non-limiting example in the accompanying drawings, wherein:

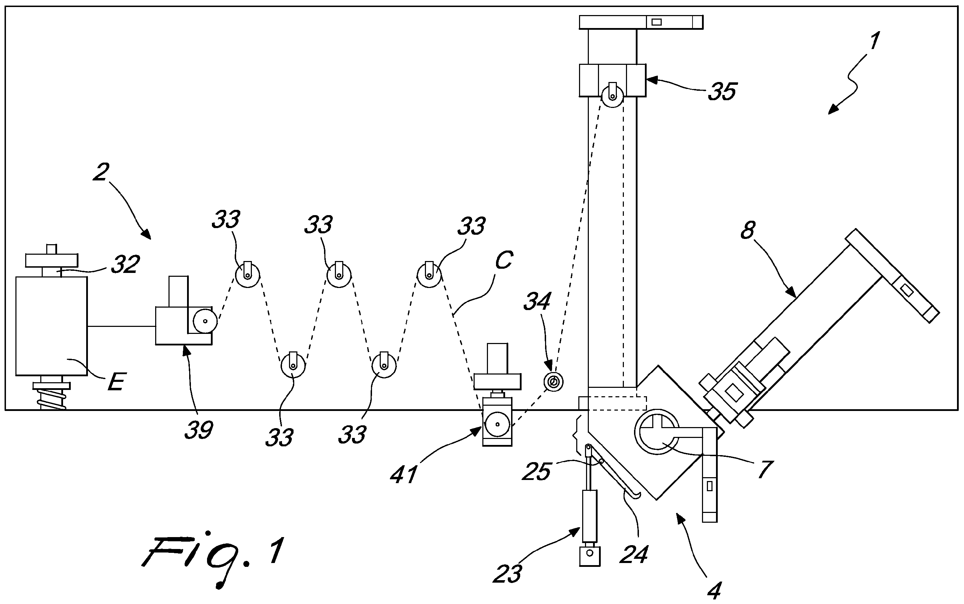

Figure 1 is a schematic front view of the tying assembly according to the invention;

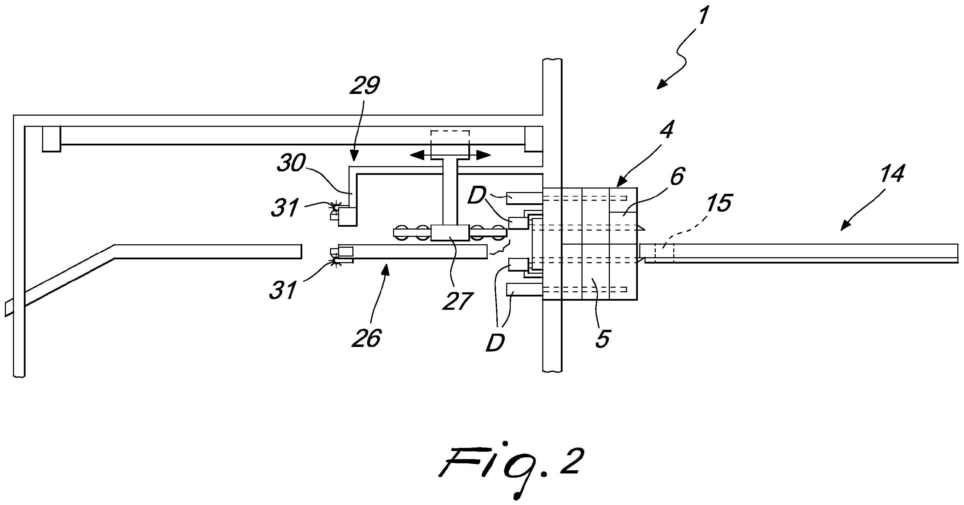

Figure 2 is a schematic side elevation view of a portion of the tying assembly according to the invention;
Figures 3 to 5 are side elevation views of the operation of the processing station;
Figure 6 is a plan view of a first component of the processing station;
Figure 7 is a plan view of a second component of the processing station;
Figure 8 is a side elevation view of the processing station with a further component;
Figure 9 is a side elevation view of the component of Figure 8;
Figure 10 is a side elevation view of the slider;
Figure 11 is a front elevation view of the slider;
Figure 12 is a top view of the slider;
Figure 13 is a schematic perspective view of a further portion of the tying assembly according to the invention;
Figure 14 is a schematic top view of the portion of the tying assembly of Figure 13;
Figure 15 is a schematic front elevation view of the processing station and of a further component;
Figure 16 is a schematic side elevation view of the processing station and of the component of Figure 15;
Figure 17 is a schematic sectional view of the pneumatic unit, taken along an axial plane;
Figure 18 is a front elevation view of a further element of the tying assembly according to the invention;
Figure 19 is a side elevation view of a detail of the tying assembly according to the invention;
Figure 20 is a front elevation view substantially of the detail of Figure 19;
Figure 21 is a front elevation view of a further element of the tying assembly according to the invention;
Figure 22 is a front elevation view of a further element of the tying assembly according to the invention;
Figure 23 is a sectional view of Figure 22, taken along the line XXIII-XXIII.

### Ways of carrying out the Invention

With reference to the figures, a tying assembly according to the invention, generally designated by the reference numeral 1, is arranged along a line for the processing of substantially elongated products A wrapped in a sheath B.

It must be specified at the outset that according to the preferred but not exclusive application of the assembly 1 according to the invention, the products A are constituted by sausages for food use, such as for example salami, small salami, cotechinos, et cetera. The sheath B is thus constituted by casing (part of animal intestine) and is capable of containing the sausage.

In the continuation of the present description, reference shall be made repeatedly to the preferred application described above, but different applications of the present invention (in any case within the protective scope claimed herein) are not excluded, for example in order to provide the tying of different products A (even by means of different types of sheaths B), if required and/or suggested by the specific requirements.

The assembly 1 comprises at least one dispenser 2 of twine C, the twine C (or string) being adapted to tie at least one protruding flap of the sheath B in order to form a knot at the end portion of the sausage, according to the packaging methods in which these food products are usually shown to the public.

The assembly 1 comprises moreover a slider 3 for sending the product A wrapped in the sheath B to a processing station 4 connected to the dispenser 2.

According to the invention, the processing station 4 comprises at least one compartment for accommodating the product A and a pneumatic circuit that is adapted to entrain the twine C into the processing station 4 (by way of the provision of an overpressure or of a partial vacuum, as will be described hereinafter). The entrainment causes the consequent bending around the compartment, in order to form and tighten a knot around the protruding flap of the sheath B.

The possibility to move the twine C, in order to provide the knot around the casing, by way of the pneumatic circuit alone (as will be described in detail hereinafter) achieves the intended goal. It is in fact possible to obtain the tying of the sausage without resorting to the plurality of mutually cooperating elements that are present in known machines, thus obtaining a great structural simplification.

According to a solution of substantial practical interest, illustrated in the accompanying drawings by way of non-limiting example of the application of the invention, the processing station 4 comprises a pair of mutually facing and joined plates 5, 6.

The plates 5, 6 are crossed by a duct 7 (which is cylindrical according to the preferred solution), which constitutes the compartment and is arranged along the processing line, in order to allow the reception (and subsequent passage) of the product A wrapped in the sheath B.

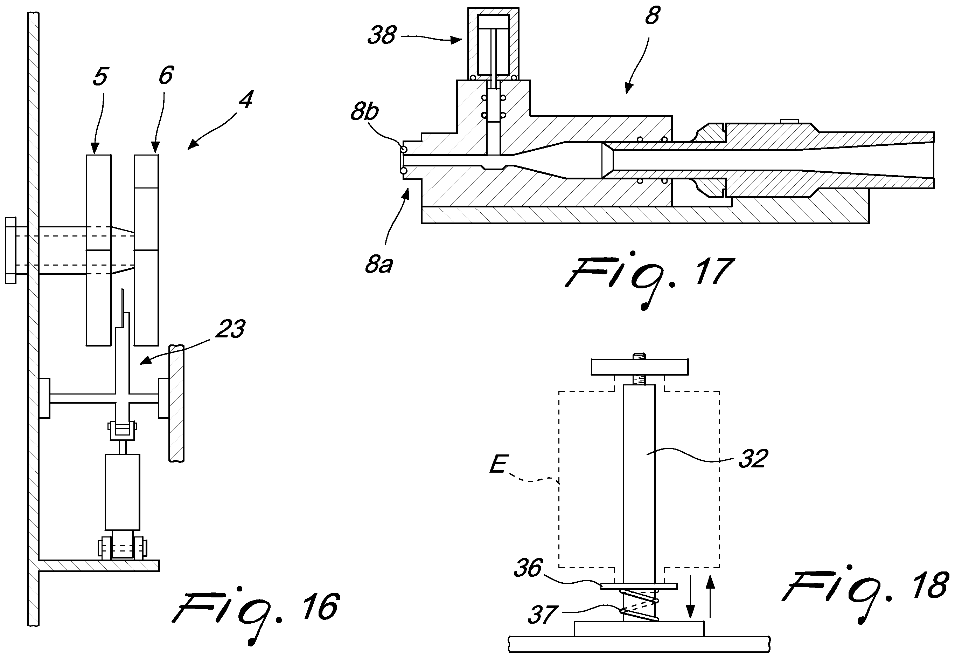

According to this embodiment, the pneumatic circuit in turn comprises a pneumatic suction unit 8 (shown in Figure 17), which is thus able to entrain by partial vacuum the twine C along a channel 9, which is formed inside the plates 5, 6, and outside the duct 7.

More precisely, the pneumatic unit 8 can comprise a vacuum generator that is able to provide the desired partial vacuum inside the channel 9.

The assembly 1 according to the invention might also be provided with different types of pneumatic circuit, for example comprising a compressor (or other device) capable of blowing into the channel 9 a flow of compressed air adapted to move the twine C similarly to what has been observed in the preceding paragraphs.

In practice, therefore, the dispenser 2 sends the twine C to one of the two plates 5, 6 and from there it is entrained along the channel 9 in order to obtain its bending in a first configuration (defined by the shape of the channel 9 itself) for preparing for subsequent tying.

After entraining the twine C and conferring it the above cited bend, the mutual separation of the plates 5, 6 allows its automatic controlled exit from the channel 9 (with the twine C conveniently tensioned, as described hereinafter) and its subsequent tightening around the protruding flap of the sheath B, thus defining a second tying configuration, which corresponds to the forming and tightening of the knot.

The type of knot provided on the protruding flap of the sheath B is thus defined by the shape of the channel 9: the assembly 1 according to the invention can be provided with plates 5, 6 having different geometries for the channel 9 (remaining in any case within the protective scope claimed herein), if it is desirable to obtain a different knot on the flap of the casing.

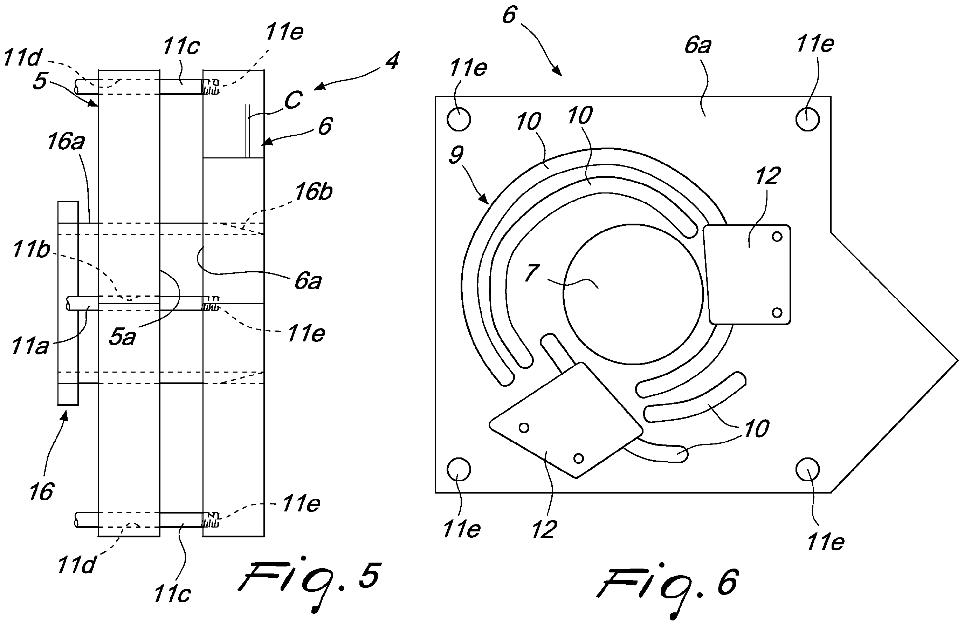

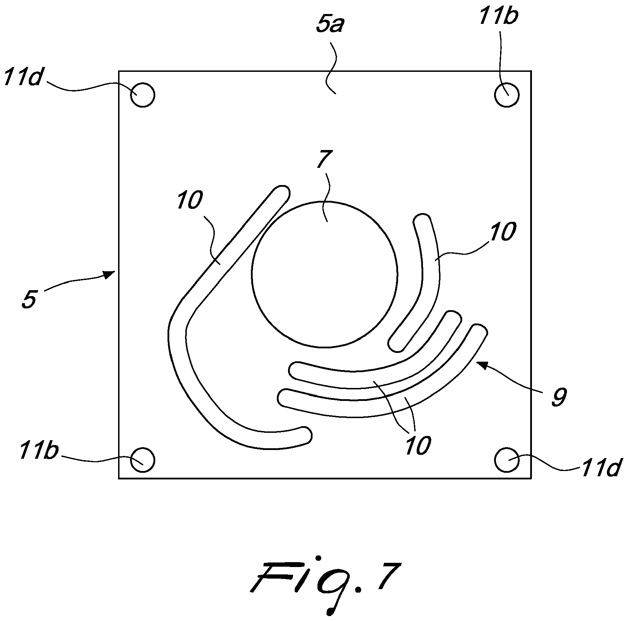

More particularly, as can be deduced from Figures 6 and 7, the mutually facing faces 5a, 6a of the plates 5, 6 have a plurality of sequentially connected grooves 10 that form the above mentioned channel 9.

In order to guide the mutual approach and spacing movement of the plates 5, 6 (and thus the mutual separation mentioned above), two shafts 11a (which are substantially perpendicular to the faces 5a, 6a) are fixed on one of the two plates 5, 6 (in the example in the figures, on the plate 6) and are inserted in through holes 11b formed in the other plate 6, 5 (in the figures, therefore, they are provided in the plate 5).

As can be deduced from the accompanying figures, the shafts 11 a and the through holes 11b are arranged at two opposite vertices of the faces 5 a, 6a of the plates 5, 6.

Stems 11c are fixed to the plate 6 proximate to the remaining two vertices and can be inserted in channels 11d formed correspondingly on the plate 5: the stems 11c, associated with the frame of the machine, are able to move the plate 6 and thus allow its spacing from the plate 5 (and its subsequent approach).

According to a possible embodiment, both the shafts 11 a and the stems 11 c are fixed to the plate 6 by means of a threaded tab thereof, which can be inserted in corresponding female threads 11e formed along the plate 6.

The mating between the shafts 11a and the through holes 11b (as well as the mating between the stems 11c and the channels 11d) further prevents the risk of unwanted mutual sliding between the two plates 5, 6 (parallel to them), thus ensuring prefect alignment between the faces 5a, 6a and the grooves 10. This alignment further ensures the optimum sealing of the pneumatic circuit (and for this purpose the faces 5a, 6a can be ground beforehand) and thus the desired suction along the channel 9 without bleeding, along the connecting region between the two plates 5, 6 outwards or between the grooves 10.

With reference to the accompanying figures, the reference numeral 5 designates the fixed plate, in which there is an exit hole 5b for the twine C, while the reference numeral 6 designates the movable plate, in which there is an entry hole 6b: reference shall be made hereinafter to this solution. However, different embodiments, in which both plates 5, 6 are movable and/ or there are different arrangements of the exit hole 5b and of the entry hole 6b, are not excluded.

More particularly, in the solution illustrated in the accompanying figures, along each plate 5, 6 there are four grooves 10: each groove 10 has a profile that is shaped like a circular arc (with a radius of preferably more than 10 mm) or a circular arc blended with rectilinear segments.

The grooves 10 of a plate 5, 6 are arranged in alternating sequence with the respective grooves 10 of the other plate 6, 5: in this manner, a precise path for the twine C is formed, and such twine is sucked into the first groove 10 of the plate 6 through the entry hole 6b which leads to a first groove 10. The end part of the latter is connected to the first groove 10 of the other plate 5, which in turn is associated, with its own end part, with the second groove 10 of the first plate 6, and so forth. Thus, by way of a series of passages from one plate to the other plate 5, 6 (and vice versa), the twine C travels along the eight grooves 10 and then exits from an exit hole 5b, which is connected to the last groove 10 of the plate 5.

The entry hole 6b has a circular cross-section and its inlet conveniently has a radial shape, in order to cause an increase in the air flow-rate that passes through the channel 9.

At each passage from one plate 5, 6 to the other, it is possible to provide along the grooves 10 appropriate upward and downward ramps, in order to smooth the path of the twine C and ensure substantial uniformity of the width of the passage section.

The twine C, entrained according to the method described above inside the channel 9, is thus bent in the first configuration and is prepared for the subsequent steps.

According to a possible embodiment, the grooves 10 are provided with a cross-section that is substantially circular (preferably with a radius comprised between 1 mm and 15 mm) or elliptical (with the major axis and the minor axis comprised between 1 mm and 30 mm and preferably equal to 11 mm and 10 mm respectively), while the inside walls have a roughness comprised between 0.1 and 10 microns (preferably between 0.6 and 3 microns) and can be subjected to a preliminary polishing step.

These specific geometries, cross-sections and finishes (which are preferred but do not limit the application of the invention, because different geometries, cross-sections and finishes can be used anyway which are nonetheless within the protective scope claimed herein) allow to reduce in a positive manner the load losses of the air flow and the resistance to the passage of the twine C that the inside walls of the channel 9 offer by friction; at the same time, the flow-rate of aspirated air is optimized.

Along the grooves 10 of at least one of the faces 6a, moreover, there are adapted partitions 12 that can move elastically, and more precisely they are arranged at the intersection points between facing portions of the channel 9 (with reference to the accompanying figures, in greater detail there are two partitions 12, respectively at the second groove 10 and at the fourth groove 10 of the plate 6).

In order to obtain the bending of the twine C according to the desired shape, aimed at obtaining the desired knot, it is in fact necessary to overlap in some points the grooves 10 that belong to opposite faces 5a: in order to avoid the danger that in such points the twine C might become entangled or might pass into the wrong groove 10, the partitions 12 are therefore adopted in the assembly 1 according to the invention.

As can be deduced from the accompanying figures, the partitions 12 are substantially constituted by laminar elements, for example having a substantial rectangular or trapezoidal shape, with bevelled edges in order to avoid hindering the passage of the twine C and avoid creating turbulence.

The partitions 12 are thus fixed to the plate 6 (for example by means of screws) at their side that lies opposite the central duct 7; the plate 6 can be hollowed in the region affected by the presence of the partitions 12 (for a depth equal to the thickness of such partitions, which can be comprised between 0.01 mm and 1 mm and preferably between 0.2 mm and 0.3 mm).

When the plates 5, 6 face each other and are joined, the partitions 12 isolate the grooves 10 that belong to the two plates 5, 6 at the intersection points, while at the mutual separation of the plates 5, 6 the tensioned twine C can exit by forcing the partitions 12. In fact they can oscillate elastically about the fixed side, thus opening a gap for the exit of the twine C on the opposite side, i.e., toward the duct 7, in order to determine subsequently the second configuration.

Once the pushing action of the twine C has ended, the partitions 12 return elastically to the initial configuration in order to be thus ready for the subsequent cycle.

Conveniently, the assembly 1 according to the invention comprises tensioning means that act at the ends of the twine C: such tensioning means (which will be described in detail hereinafter) act at the ends of the twine C in order to keep it constantly tensioned during the transition from the first configuration to the second configuration, thus allowing the tightening of the twine C around the protruding flap of the sheath B and the consequent formation of the knot.

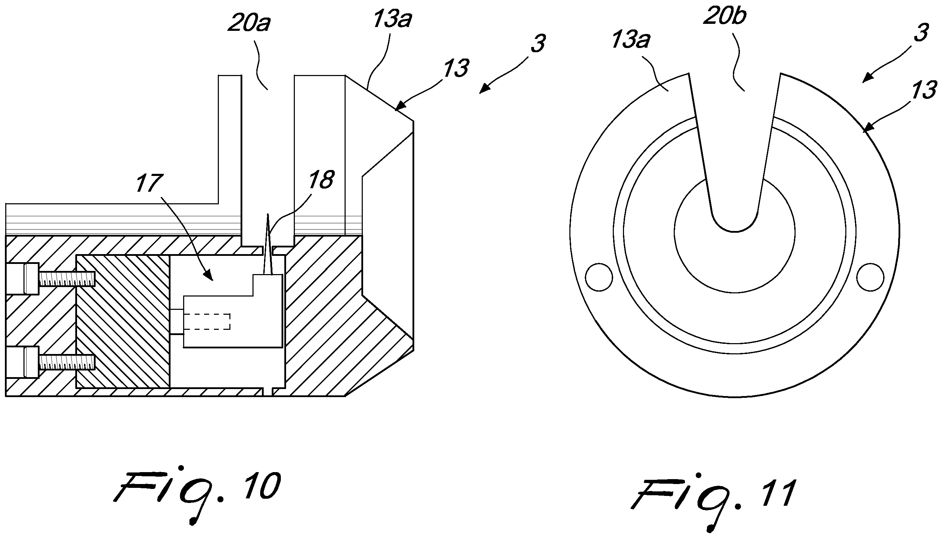

According to the preferred embodiment, and with reference in particular to Figures 10, 11 and 12, the slider 3 is constituted substantially by a sliding block 13, which can move along a first portion (which for example can have a length between 10 cm and 150 cm and preferably is comprised between 50 cm and 70 cm) of the processing line in order to transfer the product A from a loading station substantially to the duct 7 inside the plates 5, 6.

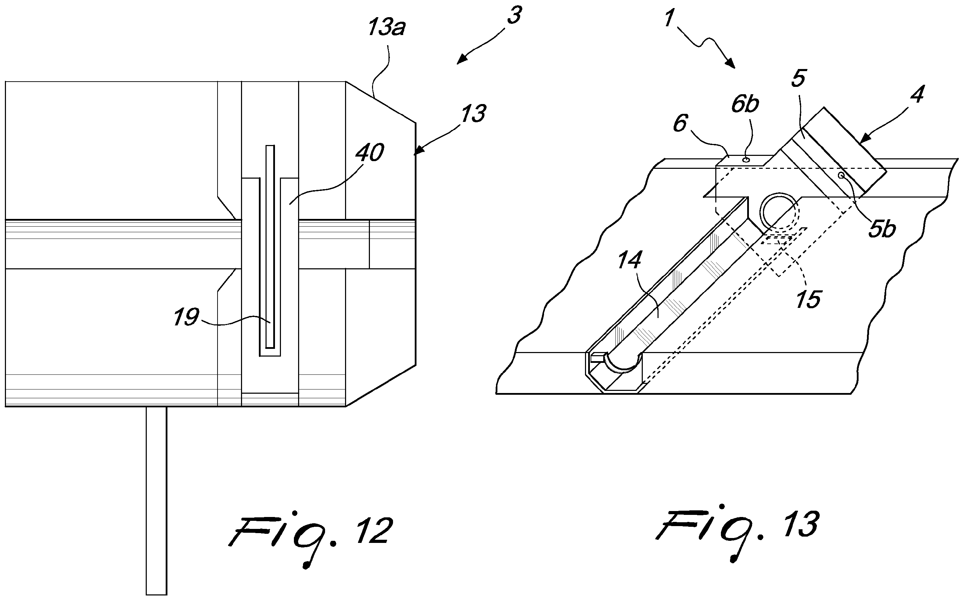

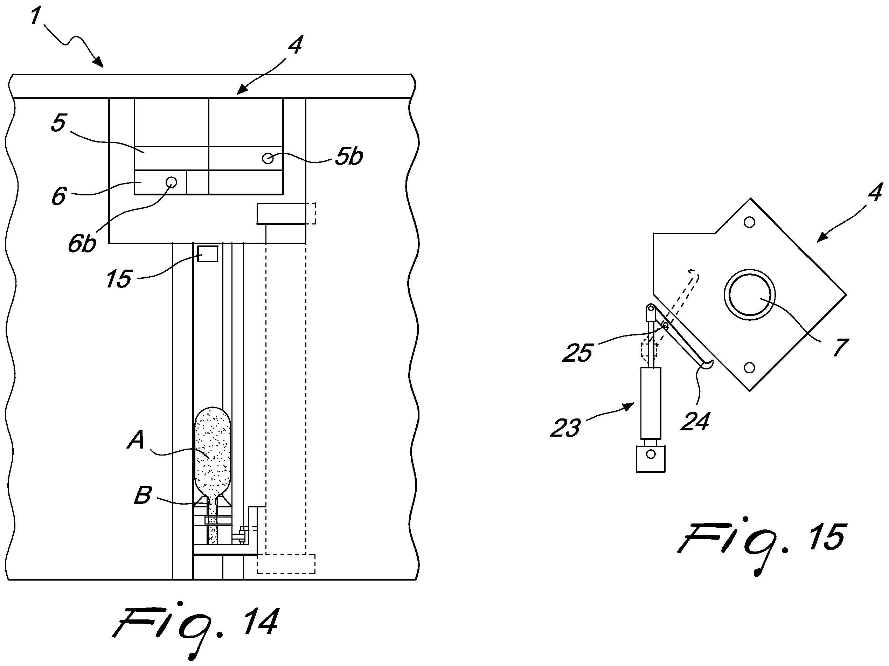

The sliding block 13 can glide along a track 14 (which coincides with the first portion of the processing line and is visible in Figures 13 and 14) that starts from the loading station: with the sliding block 13 arranged in this loading station, an operator can place in front of it a sausage (wrapped in the casing), so that during its stroke toward the processing station 4 the sliding block 13 pushes the sausage until it is inserted in the duct 7, where the tying cycle can occur.

Conveniently, the tying assembly 1 according to the invention comprises a cylindrical sleeve 16, which has a cross-section that is substantially complementary to the cross-section of the duct 7 and can move along the processing line substantially in opposition to the sliding block 13.

The sleeve 16 can thus enter the duct 7 in order to receive the twine C (arranged in the above mentioned first configuration) on its outer surfaces 16a at the mutual separation of the plates 5, 6, while the sleeve 16 can receive internally and subsequently be crossed by the product A (in an appropriate step of the tying cycle).

It should also be noted that the movement of the sleeve 16 and of the plate 6 is entrusted to respective pneumatic cylinders D.

The perfect adhesion of the outer surfaces 16a of the sleeve 16 to the duct 7 further ensures the tightness of the mutual mating and prevents external agents (water, oil, dust, other solids or liquids) from entering the channel 9 or anyway the region comprised between the two plates 5, 6; such agents otherwise would jeopardize the correct operation of the assembly 1 and would prevent maintaining the high hygiene standards required for treating and processing products A of the food type such as salami.

After receiving the twine C on its outer surfaces 16a, and after carrying the product A inside it, the subsequent movement of the sleeve 16 away from the sliding block 13 causes the tensioned twine C to abut against the face 5a of the plate 5 and thus to slide along the outer surfaces 16a of the sleeve 16 until it slides along a flared portion formed at an end region 16b thereof. This allows to transfer the twine C (which in the meantime becomes narrower) to a conical end 13a of the sliding block 13.

In turn, the taper of the conical end 13a allows the final conveyance of the twine C around the protruding flap of the sheath B, where, as will become apparent hereinafter, the final tightening and forming of the knot occur.

Advantageously, the tying assembly 1 according to the invention comprises means 17 for cutting and picking up the sheath B, which are functionally associated with the sliding block 13 in order to allow removal of the excess sheath B during the tying operation.

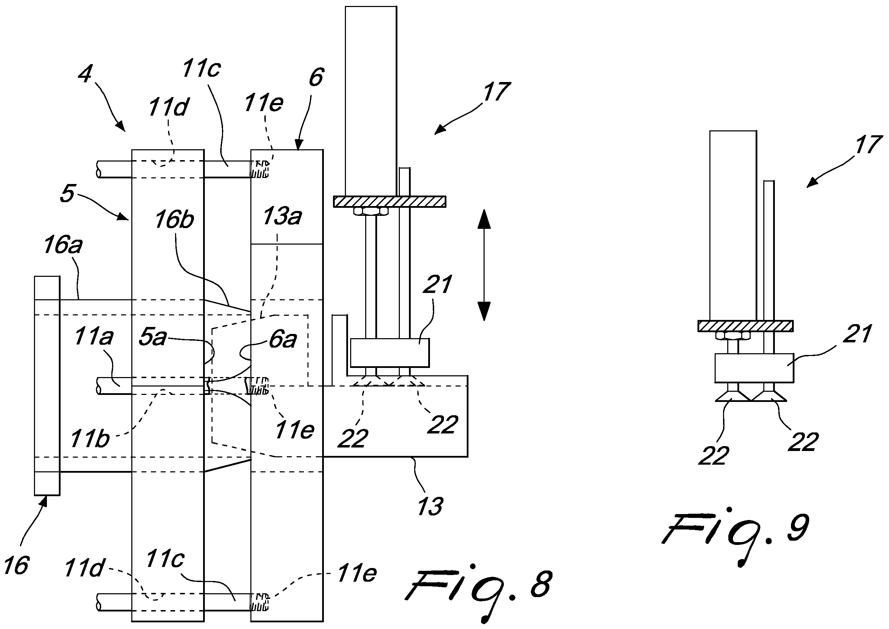

More precisely, according to an embodiment of considerable practical interest shown in particular in Figures 8, 9 and 10, the cutting and pick-up means 17 comprise a first blade 18, which can rotate and is arranged directly in the sliding block 13: during its rotary stroke (about an axis that is parallel to the direction of advancement of the product A), it exits from a slit 19 provided on the sliding block 13 and affects a cavity 20a formed proximate to the conical end 13a of the sliding block 13.

The operator can thus place the sausage along the track 14 so as to cause the excess flap of the sheath (besides the one on which tying will be performed) to occupy the cavity 20a, inserting it in a slot 20b (which is formed along the conical end 13a of the sliding block and is connected to the cavity 20a).

The actuation of the first rotary blade 18, during the advancement of the product A toward the plates 5, 6, thus allows to cut the excess casing, which in a subsequent step will be removed permanently.

In greater detail, as soon as the sliding block 13 is sent toward the processing station 4, pushing the product A, the first rotary blade 18 is activated and performs an active rotation through 270°, during which, as mentioned, it exits from the slit 19, passes through the cavity 20a and cuts the excess flap of sheath B.

This allows to remove the casing during the execution of subsequent activities of the tying cycle, without therefore affecting the overall cycle time, differently from what occurs with known assemblies.

In a subsequent step, when the sliding block 13 performs its return stroke toward the loading station in order to prepare itself for the start of the subsequent processing cycle, the first blade 18 performs a rotation through 270° in the opposite direction with respect to the active rotation described earlier, in order to also reposition itself as at the beginning of the cycle.

The cutting and pick-up means 17 further comprise, according to the preferred embodiment, a block 21, which is arranged along the track 14 (and more precisely proximate to the processing station 4) and supports at least one pick-up sucker 22 (two in the accompanying figures).

The pick-up suckers 22 can move in order to place themselves, after the action of the first rotary blade 18, proximate to the cavity 20a and pick up, by suction, the casing cut previously, which in turn can be deposited subsequently in an opening 15 provided along the track 14.

In order to facilitate the release of the casing and its expulsion through the opening 15 by way of a suitable supply of compressed air it is possible to generate an opposite stream that is capable of pushing the casing, detaching it from the pick-up suckers 22.

It should be noted that the choice to resort to the cutting and pick-up means 17 described above ensures correct expulsion of the casing, differently from what occurs in known assemblies, in which such activity occurs automatically upon the impact of the slider at the end of its stroke, at the loading station. As is evident, the lack of control of the casing that occurs with the method described above entails the risk that such casing might be expelled toward the processing regions of the machine, with consequent risk of malfunctions.

Conveniently, the tying assembly 1 according to the invention comprises a cutting element 23 (shown in Figures 15 and 16), which can be actuated substantially at the second configuration, in order to cut the twine C upstream of the protruding flap of the sheath B, once the knot is formed and tightened, and to allow the forward movement of the product A toward the unloading station.

More particularly, the cutting element 23 comprises a second rotary blade 24, which can rotate about a fixed pivot 25: according to the preferred embodiment, the second rotary blade 24 performs a rotation through 150° about the pivot 25, thus crossing the space formed between the two plates 5, 6 in order to cut the twine C. Subsequently it performs the rotation in the opposite direction and returns in position waiting for the subsequent product A.

The knot, and the product A, are thus freed from the remaining parts of the twine C and can thus continue their forward movement along the processing line, as will be described hereinafter.

Conveniently, the tying assembly 1 according to the invention comprises means 26 for gripping the product A, which are preferably of the pneumatic type and allow to pick up the product A by partial vacuum substantially from the duct 7 (after tying has been performed).

Subsequently, they are able to move it along a second portion of the processing line up to an unloading station.

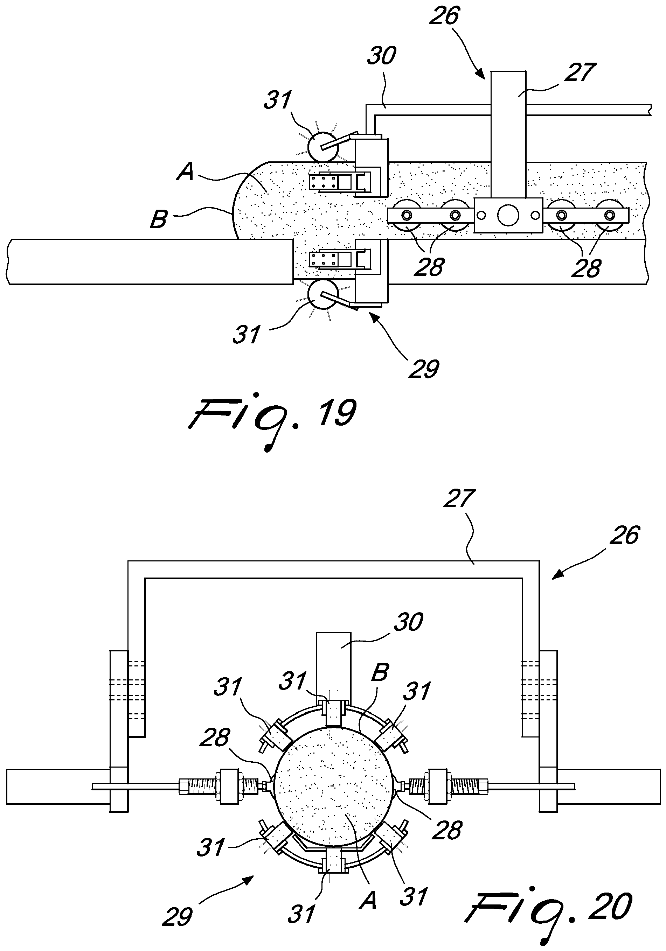

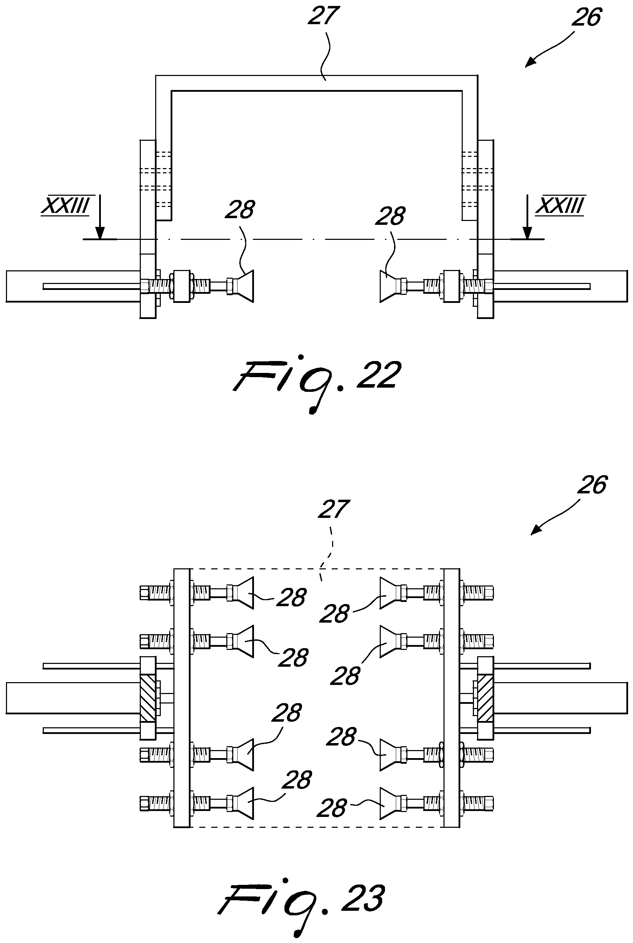

In particular, with reference to Figures 19, 20, 22 and 23, the grip means 26 comprise a carriage 27, which can move along the second portion of the processing line, which carries at least one gripping sucker 28 (it is specified that the number of grip suckers 28 mounted on the carriage 27, as well as the one of the pick-up suckers 22, is variable according to the specific requirements, without thereby abandoning the protective scope claimed herein).

The grip suckers 28 also can move: in this manner, after the carriage 27 has arrived proximate to the processing station 4, they can arrange themselves laterally adjacent to the sausage and fasten it on the sides (according to one possible embodiment), immediately after the sausage has been inserted in the duct 7, thanks to the thrust of the sliding block 13.

Once gripped by the grip suckers 28, the sausage and the casing undergo the tying operations already described, which allow to form and tighten the knot, and subsequently the carriage 27 performs a translational motion along the second portion of the processing line (stopping in an intermediate point, at the cutting of the twine C, as described hereinafter) in order to carry the product A to the unloading station (thereby actually finishing the tying cycle).

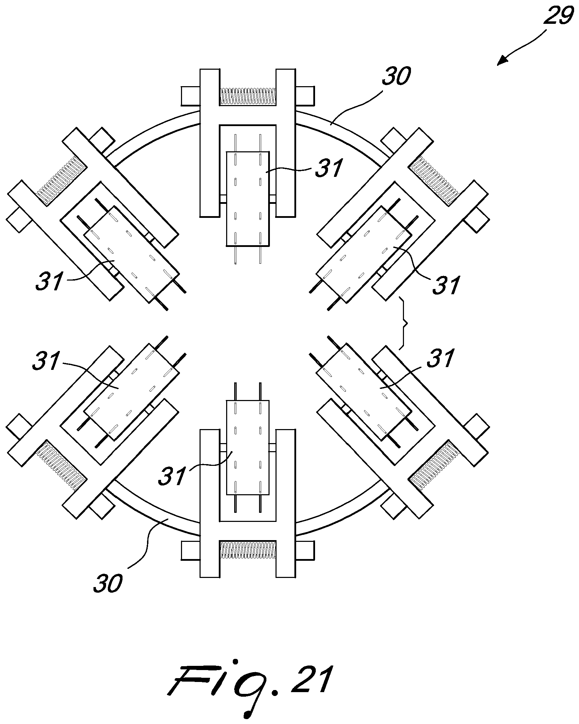

With reference to Figures 19, 20 and 21, along the above cited second portion of the processing line there is positively an apparatus 29 for piercing the product A and the sheath B.

It is capable of piercing automatically the product A (therefore without requiring the intervention of an operator, as occurs according to the background art), an operation performed typically on sausages before subjecting them to seasoning in order to facilitate, during this last activity, the escape of moisture and of any undesired gases released.

The piercing apparatus 29 acts automatically during the movement of the product A by the grip means 26 and in order to do so it comprises a substantially ring-like frame 30 that is crossed internally by the second portion of the processing line.

Multiple spiked rollers 31 are fixed radially along the frame 30 (by means of a coupling of the elastic type), face inwards and are arranged so as to interfere at least partially with the path of the product A.

In this manner, during forward movement toward the unloading station, the sausage moves automatically into contact with the spiked rollers 31 and, under the thrust of the grip means 26, pushes against them, producing the desired piercing.

The rollers 31, moreover, can rotate, and this allows their rotation under the thrust applied by the product A and the provision of a multiple piercing; subsequently, the further thrust of the grip means 26 allows to overcome the elastic reaction applied by the elastic coupling of the rollers 31, in practice causing a slight movement thereof and allowing the passage of the sausage.

Once the sausage has passed the frame 30, the spiked rollers 31 return elastically to the initial position, thus getting ready for the subsequent processing cycle.

The operation of the tying assembly according to the invention is as follows.

Before the beginning of the first tying cycle, it is necessary to install rotatably a reel E of twine C on a reel holder 32 comprised in the dispenser 2: the twine C can thus be unwound from the reel E and, after inserting it optionally in at least one fixed wheel 33 and in at least one twine retention device 34, it can be inserted in the entry hole 6b provided in the plate 6. Before reaching the entry hole 6b, the twine is moreover inserted in a feeder slide 35, which is capable of moving toward and away from the entry hole 6b in order to follow the entrainment of the twine C and tension it during the various steps.

In the single starting step of the assembly 1, the operator must also ensure that the twine C is at least partially inserted within the first groove 10 of the channel 9.

It should also be noted that in order to keep the twine C tensioned constantly, even in the subsequent steps, the tensioning means mentioned earlier can comprise a plate 36, which is mounted on the reel holder 32 and placed in contact with one of the two sides of the reel E.

The plate 36, on the opposite side with respect to the reel E, undergoes the elastic action of a spring 37 that keeps it under constant pressure on the reel E and prevents the unintentional unwinding of such reel by friction.

Therefore, due to the unwindings of the twine C (entrained in the channel 9), upstream of the plates 5, 6 the twine C is constantly kept tensioned by the presence of the plate 36 and of the spring 37, as well as by the feeder slide 35 and by further elements that will be described hereinafter.

On the opposite side with respect to the plate 6 on which the entry hole 6b is provided, the suction inlet 8a of the pneumatic unit 8 (which also is movable) is coupled hermetically to the other plate 5, at the exit hole 5b. In order to ensure the seal, a gasket 8b can be provided along the edges of the suction inlet 8b.

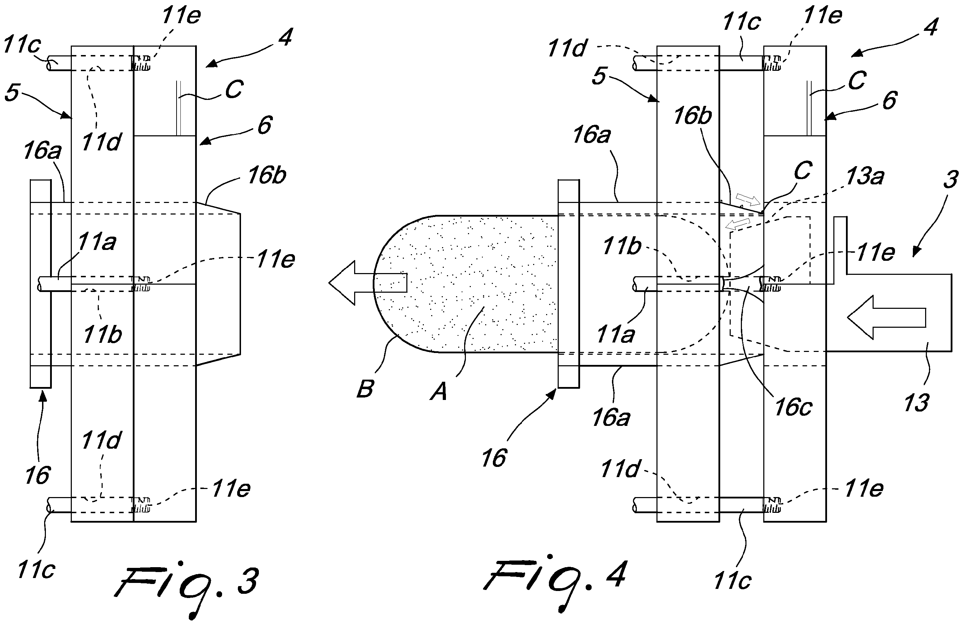

Before activating the pneumatic unit 8, and substantially starting the cycle, the plates 5, 6 are mutually joined, the sleeve 16 is completely inserted in the duct 7 (protruding from it in the direction of the loading station, as can be seen from Figure 3), the slide 35 is spaced from the plates 5, 6, the carriage 27 is near to them, while the sliding block 13 is arranged proximate to the loading station.

When the cycle starts (actuated by an operator), the pneumatic unit 8 provides (by means of the vacuum generator with which is provided) a partial vacuum inside the channel 9, by way of which it entrains the twine C into the plates 5, 6 (due to the friction generated by the air flow on the twine C inserted in the first groove 10).

The entrainment of the twine C inside the channel 9 is accompanied by the lowering of the slide 35, which moves closer to the plates 5, 6 until it reaches the end of its stroke correspondingly to the exit of the free end of the twine C from the exit hole 5b that enters the suction inlet 8a of the pneumatic unit 8.

In the suction inlet 8a, a first presser 38, comprised in the tensioning means, is able to fasten the end of the twine C, while the slide 35 stops and interrupts the action of the pneumatic unit 8, thus restoring the atmospheric pressure inside the channel 9, where the twine C is thus arranged, bent into the first configuration for prearrangement for subsequent knotting.

At this point it is possible to move the plate 6, in order to cause separation from the plate 5, while the slide 35 rises again, causing a first fastening of the twine C, that exits from the grooves 10, in order to converge toward the outer surfaces 16a of the sleeve 16.

The movement of the twine C that exits from the grooves 10 is controlled by the partitions 12, because their elastic reaction opposes a force that contrasts the force of the twine C and prevents the risk of an abrupt expulsion, forcing instead a gradual one, thus avoiding the possible formation of undesired tangles, which might jeopardize the correct execution of the tying operations.

The away movement of the slide 35 until it reaches a preset height imposes the unwinding of the twine C from the reel E (for a suitable length, in order to be able to use it for the subsequent cycle).

Once this height has been reached, a second presser 39, which is comprised within the tensioning means and has a function similar to the first one, is activated in order to lock the twine C (inserted in the presser 39 at the start of the first cycle) in the position thus determined.

At this point, the operator can deposit a first product A along the track 14, ensuring that the protruding flap of the sheath B to be knotted, and the excess part are accommodated in the cavity 20a in the manner already shown.

The sliding block 13 can thus be actuated in order to send the product A to the duct 7 formed within the plates 5, 6. Positively, and with particular reference to Figure 12, the sliding block 13 can comprise a fork 40 that can move and can be activated even automatically during the stroke of the sliding block 13 in order to be pressurized on the base of the cavity 20a in order to fasten firmly the excess sheath B, preventing unwanted movements of the sheath B (due to vibrations, for example).

Once the product A has been inserted in the duct 7, the carriage 27 fastens the product A by means of the pick-up suckers 28, as described earlier; likewise, the pick-up suckers 22 carried by the block 21 are also actuated in order to adhere to the excess sheath (which is cut off by the first rotary blade 18 during the stroke itself of the sliding block 13).

It is now possible to move the sleeve 16, which moves away from the sliding block 13, causing, as described in the preceding paragraphs, the transfer of the twine C tied to the conical end 13a of the sliding block 13 and subsequently its fastening around the flap of the sheath B.

This fastening is allowed by the tensioning of the twine C due to the movement of the slide 35 and of the pneumatic unit 8 away from the processing station 4.

More precisely, as can be seen from Figure 4, due to the sliding of the twine C on the conical end 13a, such twine is conveyed onto two gaps 16c provided along the sides of the sleeve 16, and while the twine C rests on the gaps 16c the final fastening around the flap of the sheath B is provided.

Once the knot has formed, the fork 40 is actuated in order to free the sheath, allowing to recover (by way of the pick-up suckers 22) the excess cut previously; the sliding block 13 can thus return proximate to the loading station (in order to wait for the start of the subsequent cycle), while the first blade 18 returns to the initial position.

With the knot formed and tightened around the flap of the sheath B, the first presser 38 releases the twine C and then the slide 35 moves closer to the plates 5, 6, while the carriage 27 (which retains the product A with the grip suckers 28) moves away from them.

The carriage 27 and the slide 35 start and stop at the same times, and then the cutting element 23 is actuated and cuts, in the space comprised between the two plates 5, 6, the twine C upstream of the knot, while the pick-up suckers 22 release the excess sheath into the opening 15 (thanks also to the presence of the opposite stream described earlier).

At this point the carriage 27 restarts its stroke toward the unloading station, and during this stroke, as already observed, the piercing of the product A wrapped in the sheath B occurs.

At the same time a further movable wheel 41 (preferably of the pneumatic type), which can be comprised in the dispenser 2 and arranged upstream of the plates 5, 6, performs a translational motion in order to recover part of the twine C that is arranged between the two plates 5, 6, which repositions itself within the first groove 10 of the channel 9, from which it may be aspirated during the subsequent cycle (and for this purpose, the plates 5, 6 reconnect and the sleeve 16 returns to the initial position).

Once it has reached the unloading station, the carriage 27 releases the product A, deactivating the pick-up suckers 28, and optionally thanks to the action of another opposite stream.

In practice, the initial conditions are thus restored automatically (the return of the movable wheel 41 to the initial position occurs at the first movement of the slide 35 in the subsequent cycle) and it is thus possible to proceed with the tying of another sausage.

It is useful to specify that it is possible, and is within the protective scope claimed herein, to provide the tying assembly 1 according to the invention with a clamp in order to grip the twine C, arranged proximate to the entry hole 6b.

Such clamp is a further guarantee that the twine C is kept in position during tying operations (and in particular upon the cutting of the twine C) and it is then able to free it after the cutting element 23 has cut it.

According to a further embodiment, which lies within the protective scope claimed herein, a tooth protrudes upward from the lower region of the inlet of the inside passage of the sleeve 16 (at the end region 16b) and is designed to receive the product: the track 14 abuts and rests on the tooth, with the plate 6 separated from the plate 5.

During the movement of the sleeve 16 away from the sliding block 13, as already described, such tooth allows to push and drain toward the inside of the sleeve 16 any water drops that can, in certain circumstances, soak the twine C.

More specifically, the water thus propelled reaches the bottom of the internal surface of the sleeve 16, which for this purpose can be inclined so as to make it slide until it exits from the opposite side with respect to the end region 16b.

The outward conveyance of this water prevents such water from being able to otherwise seep between the plates 5, 6 causing damage and/or preventing compliance with hygiene standards.

Finally, it is noted that in the preferred solution, the movements of the linear axes are entrusted to brushless motors or step motors, but the possibility to provide tying assemblies 1 in which the linear axes are controlled by mechanical motors or electric motors is nonetheless no excluded.

More generally, it is noted that the movements of the various moving components can be entrusted to any guide or axis of the electrical or mechanical type.

In some solutions, fixed or movable mechanical abutments can be provided in order to have precise and fast external and/or intermediate positions.

For example, the fixed abutments can be provided for the pneumatic unit 8 and for the slide 35 (in order to affect the external and/or intermediate height at which it stops during the cycle) and the movable abutment can be used instead for the intermediate positioning of the carriage 27 and of the slide 35.

It is thus clear from the description given above that the assembly 1 according to the invention achieves the aim of forming the knot in a substantially static manner, without resorting to a plurality of moving mechanical components to be synchronized and/or sequenced with precision, thus achieving the goal of structural simplification with respect to known assemblies.

The assembly 1 therefore has a high reliability and requires reduced maintenance (and a very small number of components, at least 30% less than known assemblies), and it can perform the further operation of piercing, without thereby requiring the intervention of an operator (who can be forced to spend several seconds per cycle to do it).

Moreover, the assembly 1 allows to vary the length of the ends of the twine C.

Moreover, it should be noted that the prototypes developed so far have pointed out the possibility to perform a full processing cycle in a time equal to about 2.5 seconds (time given by way of example, thereby not excluding further reductions), considerably shorter than the 3 seconds ensured by the best currently commercially available machines.

Moreover, it is appropriate to note that the knot obtained by way of the assembly 1 according to the invention and defined by the shape chosen for the channel 9 differs advantageously from the ones obtained typically with known tying assemblies.

During subsequent seasoning, it is in fact possible to hang the sausage by using the ends of the twine C itself (at the sides of the knot) for further tying and for the consequent forming of a slot into which a supporting bar is inserted, the sausage being thus hung from such bar during seasoning.

By way of the particular shape of the knot, in this configuration, the knot around the flap of the sheath B tightens further preventing automatically any disengagement. This does not occur with knots obtained by means of known assemblies, for which it is not possible to use the ends at the sides of the knot for the second tying and an operator therefore has to check for perfect tightening before hanging them from the bar (with a second tying) in order to prevent the knot from loosening (due to insufficient tightening), causing the product A to fall or cutting the casing (due to excessive tightening).

The tying method according to the invention is particularly suitable for substantially elongated products A wrapped in a sheath B, products A that can move along a processing line affected by a tying assembly 1 and consists, in a first step a., in feeding a processing station 4 of the assembly 1 with a twine C that is dispensed by a dispenser 2 and is adapted to tie at least one protruding flap of the sheath B.

The tying method provides moreover, in a step b., for sending, by means of a slider 3, the product A wrapped in the sheath B to a compartment formed in the processing station 4.

Subsequently, the method provides, in a step c., entrainment of the twine C by means of a pneumatic circuit that comprises a pneumatic suction unit 8 and a channel 9, which is external to the compartment, for the consequent bending of the twine C around the compartment.

After bending the twine C according to the shape formed by the channel 9, the method according to the invention provides, in a step d., the forming and tightening of the knot around the protruding flap of the sheath B.

In practice it has been found that the tying assembly according to the invention fully achieves the intended aim, since the choice to resort a pneumatic circuit in order to entrain the twine, bending it, around a compartment formed in a processing station, allows to obtain the forming and tightening of the knot around the protruding flap of a sheath that wraps a product through a solution of high structural simplicity.

The invention thus conceived is susceptible of numerous modifications and variations, all of which are within the scope of the appended claims; all the details may further be replaced with other technically equivalent elements.

In the exemplary embodiments shown, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the dimensions, may be any according to requirements and to the state of the art.

The disclosures in Italian Patent Application No. BO2009A000378 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A tying assembly, arranged along a line for the processing of substantially elongated products (A) wrapped in a sheath (B), comprising:
- at least one dispenser (2) of twine (C), adapted for tying at least one protruding flap of the sheath (B), and
- a slider (3) for sending the product (A) wrapped in the sheath (B) to a processing station (4) connected to said dispenser (2), said processing station (4) comprising:
- at least one compartment for accommodating the product (A),
- a pneumatic circuit adapted for entraining the twine (C) and consequently bending it around said compartment, in order to form and tighten a knot around the protruding flap of the sheath (B), and
- a pair of mutually facing plates (5, 6), which are joined and crossed by a duct (7), which constitutes said compartment and is arranged along said processing line,
**characterized in that**
- said plates (5, 6) have mutually facing faces (5a, 6a) provided with a plurality of grooves (10) that are sequentially connected so as to form a channel (9),
- said pneumatic circuit comprising a pneumatic unit (8) for entraining the twine (C) along said channel (9) formed inside said plates (5, 6) and outside said duct (7),
- adapted partitions (12) comprising elastically movable laminar elements, being arranged along said grooves (10) of at least one of said faces (5a, 6a) of the plates, at the intersection points between facing portions of said channel (9), in order to shut off the grooves (10) of the two plates at the intersection points, when the two plates are in contact with each other and the twine is bending into the channel (9) in a first configuration for an arrangement to a subsequent knotting of the twine; said adapted partitions (12) being suitable for allowing the exit of the twine (C) from the channel (9) by means of elastic bending of the partitions (12), when the plates (5, 6) are remove away each other and the twine (C) is tightening in a second knotting configuration, in order to obtain the tightening of the knot around the sheath (B).

2. The tying assembly according to claim 1, **characterized in that** it comprises tensioning means, which act at the ends of the twine (C) for controlling its tightening around the protruding flap of the sheath (B) and to allow transition from said first configuration to said second configuration.

3. The tying assembly according to claim 1, **characterized in that** said slider (3) is constituted substantially by a sliding block (13), which can move along a first position of said processing line in order to transfer the product (A) from a loading station substantially up to said duct (7) arranged inside said plates (5, 6).

4. The tying assembly according to one or more of the preceding claims, **characterized in that** it comprises a sleeve (16), which can move along said processing line in substantial opposition to said sliding block (13), said sleeve (16) having a cross-section that is substantially complementary to the cross-section of said duct (7) and being adapted to receive the twine (C) arranged in said first configuration on its outer surfaces (16a) at the mutual spacing of said plates (5, 6), the subsequent movement of said sleeve (16) away from said sliding block (13) making the twine (C) slide along said outer surfaces (16a) of said sleeve (16) until it slides along a flared portion formed at an end region (16b) thereof, for the transfer of the twine (C) to a conical end (13a) of said sliding block (13), the taper of said conical end (13a) allowing the final conveyance of the twine (C) around the protruding flap of the sheath (B).

5. The tying assembly according to one or more of the preceding claims, **characterized in that** it comprises means (17) for cutting and picking up the sheath (B), which are functionally associated with said sliding block (13) in order to allow removal of the excess sheath (B) during the tying operations.

6. The tying assembly according to one or more of the preceding claims, **characterized in that** it comprises a cutting element (23), which can be actuated substantially at said second configuration, in order to cut the twine (C) upstream of the sheath (B) and to allow the advancement of the product (A) toward the unloading station.

7. The tying assembly according to claim 1, **characterized in that** it comprises means (26) for gripping the product (A), preferably of the pneumatic type, for picking up the product (A) substantially from said duct (7) and move it along a second portion of said processing line up to an unloading station.

8. The tying assembly according to one or more of the preceding claims, **characterized in that** it comprises an apparatus for piercing the product (A) and the sheath (B), said apparatus being arranged along said second portion of said processing line for automatic piercing during the movement of the product (A) on the part of said grip means (26).

9. A tying method, particularly for substantially elongated products (A) wrapped in a sheath (B) and movable along a processing line affected by a tying assembly (1) which comprises the steps of:
a. feeding a processing station (4) of said assembly (1) with a twine (C) that is dispensed by a dispenser (2) and is adapted for tying at least one protruding flap of the sheath (B);
b. sending, by means of a slider (3), the product (A) wrapped in the sheath (B) to a compartment formed in said processing station (4);
c. entraining the twine (C) by means of a pneumatic circuit for the consequent bending of the twine (C) around said compartment;
d. forming and tightening the knot around the protruding flap of the sheath (B),
**characterized in that**
- the twine (C) is entrained into a channel (9) obtained by a plurality of sequentially connected grooves (10) obtained in plates (5, 6) having mutually facing faces (5a, 6a),
- the formation of the knot is obtained by means of adapted partitions (12) comprising elastically movable lamellar elements arranged along said grooves (10) of at least one of said faces (5a, 6a) of the plates, at the intersection points between facing portions of said channel (9), in order to shut off the grooves (10) of the two plates (5, 6) at intersection points, when the two plates are in contact with each other and the twine (C) is bending into the channel (9) in a first configuration for an arrangement to a subsequent knotting of the twine, and
- the tightening of the knot is obtained by moving away the plates (5, 6) and tightening of the twine (C) exiting from the channel (9) by elastic bending of the partitions (12).

## Patentansprüche

1. Abbindevorrichtung, die längs einer Verarbeitungslinie von im Wesentlichen länglichen Produkten (A) angeordnet ist, die in eine Hülle (B) eingewickelt sind, umfassend:
- wenigstens einen Spender (2) von Schnur (C), der zum Abbinden von wenigstens einem auskragenden Ende der Hülle (B) geeignet ist, und
- einen Schieber (3) zum Fördern des in der Hülle (B) eingewickelten Produkts (A) zu einer Verarbeitungsstation (4), die mit dem Spender (2) verbunden ist, wobei die Verarbeitungstation (4) Folgendes umfasst:
- wenigstens ein Fach für die Aufnahme des Produkts (A),
- einen pneumatischen Kreislauf, der zum Mitnehmen der Schnur (C) und zum anschließenden Winden derselben rund um das Fach, zum Formen und Anziehen eines Knotens um das auskragende Ende der Hülle (B) geeignet ist, und
- ein Paar von einander gegenüberliegenden Platten (5, 6) die miteinander verbunden und von einer Leitung (7) durchquert sind, die das Fach bildet und längs der Verarbeitungslinie angeordnet ist,
**dadurch gekennzeichnet, dass**
- die Platten (5, 6) einander gegenüberliegende Flächen (5a, 6a) haben, die mehrere Rillen (10) umfassen, die aufeinander folgend verbunden sind, derart, dass sie einen Kanal (9) bilden,
- wobei der pneumatische Kreislauf eine pneumatische Ansaugeinheit (8) umfasst, um die Schnur (C) längs des Kanals (9) mitzunehmen, der innerhalb der Platten (5, 6) und außerhalb der Leitung (7) ausgebildet ist,
- entsprechende Trennwände, (12), die elastisch bewegliche, lamellenförmige Elemente umfassen, die an den Rillen (10) wenigstens einer der beiden Flächen (5a, 6a) der Platten an den Schnittpunkten zwischen den sich gegenüberliegenden Abschnitten des Kanals (9) angeordnet sind, um die Rillen (10) der beiden Platten im Schnittpunkt zu isolieren, wenn die beiden Platten sich im Kontakt zueinander befinden und die Schnur in einer ersten Ausgestaltung zur Vorbereitung des darauffolgenden Verknotens der Schnur um den Kanal (9) gewunden ist; wobei die Trennwände (12) dazu geeignet sind, das Austreten der Schnur (C) aus dem Kanal (9) mittels elastischen Biegens der Trennwände (12) zu ermöglichen, wenn die Platten (5, 6) voneinander entfernt sind und die Schnur (C) in einer zweiten Ausgestaltung zum Verknoten gespannt ist, um ein Anziehen des Knotens um die Hülle (B) zu erreichen.

2. Abbindevorrichtung nach Anspruch 1, **dadurch gekennzeichnet, dass** sie Spannmittel umfasst, die auf die Enden der Schnur (C) wirken, um das Spannen derselben um das aus der Hülle (B) auskragende Ende zu steuern und den Übergang von der ersten Ausgestaltung zur zweiten Ausgestaltung zu ermöglichen.

3. Abbindevorrichtung nach Anspruch 1, **dadurch gekennzeichnet, dass** der Schieber (3) im Wesentlichen aus einem Schlitten (13) besteht, der längs eines ersten Abschnitts der Verarbeitungslinie bewegbar ist, um das Produkt (A) im Wesentlichen bis zu einer Leitung (7) im Inneren der Platten (5, 6) zu befördern.

4. Abbindevorrichtung nach einem beliebigen der vorstehenden Ansprüche, **dadurch gekennzeichnet, dass** sie eine Hülse (16) umfasst, die längs der Verarbeitungslinie im Wesentlichen dem Schlitten (13) entgegengesetzt bewegbar ist, wobei die Hülse (16) einen Querschnitt aufweist, der im Wesentlichen komplementär zum Querschnitt der Leitung (7) und dazu geeignet ist, die Schnur (C) aufzunehmen, die in der ersten Ausgestaltung auf ihren Außenflächen (16a) im gegenbezüglichen Zwischenraum der Platten (5, 6) angeordnet ist, wobei die anschließende Bewegung zum Entfernen der Hülse (16) von dem Schlitten (13) dazu führt, dass die Schnur (C) längs den Außenflächen (16a) der Hülse (16) läuft, bis sie längs einer Ausweitung gleitet, die an einem ihrer Endbereiche (16b) definiert ist, um die Schnur (C) an ein konisches Ende (13a) des Schlittens (13) zu bringen und das endgültige Zuführen der Schnur (C) um das auskragende Ende der Hülse (B) zu ermöglichen.

5. Abbindevorrichtung nach einem oder mehreren der vorstehenden Ansprüche, **dadurch gekennzeichnet, dass** sie Mittel zum Schneiden und Entnehmen (17) der Hülle (B) umfasst, die operativ mit dem Schlitten (13) verbunden sind, um das Entfernen der überschüssigen Hülle (B) während der Abbindearbeiten zu ermöglichen.

6. Abbindevorrichtung nach einem oder mehreren der vorstehenden Ansprüche, **dadurch gekennzeichnet, dass** sie ein Schneideorgan (23) umfasst, das im Wesentlichen an der zweiten Ausgestaltung betätigbar ist, um die Schnur (C) vor der Hülle (B) abzuschneiden und den Vorschub des Produkts (A) zur Entladestation zu ermöglichen.

7. Abbindevorrichtung nach Anspruch 1, **dadurch gekennzeichnet, dass** sie Mittel - vorzugsweise pneumatischen Typs - zum Greifen (26) des Produkts (A), zum Entnehmen des Produkts (A) im Wesentlichen aus der Leitung (7) und zur Bewegung desselben längs eines zweiten Abschnitts der Verarbeitungslinie bis zu einer Entladestation umfasst.

8. Abbindevorrichtung nach einem oder mehreren der vorstehenden Ansprüche, **dadurch gekennzeichnet, dass** sie eine Vorrichtung zum Durchbohren des Produkts (A) und der Hülle (B) umfasst, wobei die Vorrichtung längs des zweiten Abschnitts der Verarbeitungslinie zum automatischen Durchbohren während der Bewegung des Produkts (A) seitens der Mittel zum Greifen (26) angeordnet ist.

9. Abbindeverfahren, insbesondere für im Wesentlichen längliche Produkte (A), die in eine Hülle (B) eingewickelt und längs einer von einer Abbindevorrichtung (1) beeinflussten Verarbeitungslinie bewegbar sind, das folgende Schritte umfasst:
a. wenigstens eine Verarbeitungsstation (4) der Vorrichtung (1) mit einer Schnur (C), die von einem Spender (2) abgegeben wird und zum Abbinden von wenigstens einem aus der Hülle (B) auskragenden Ende geeignet ist;
b. Zuführen des in der Hülle (B) eingewickelten Produkts (A) mittels eines Schiebers (3) in ein Fach, das in der Verarbeitungsstation (4) definiert ist;
c. Mitnehmen der Schnur (C) mittels eines pneumatischen Kreislaufs für das anschließende Winden der Schnur (C) um das Fach;
d. Formen und Anziehen eines Knotens um das auskragende Ende der Hülle (B),
**dadurch gekennzeichnet, dass**
die Schnur (C) in einen Kanal (9) hineingezogen wird, der aus mehreren Rillen (10) herausgearbeitet ist, die aufeinander folgend verbunden aus den Platten (5, 6) herausgearbeitet sind, deren Flächen (5a, 6a) einander gegenüberliegen,
- die Bildung des Knotens mittels Trennwänden (12) erhalten wird, die lamellenförmige Elemente umfassen, die elastisch bewegbar, längs den Rillen (10) wenigstens einer der Flächen (5a, 6a) der Platten in Schnittpunkten zwischen gegenüberliegenden Abschnitten des Kanals (9) angeordnet sind, um die Rillen (10) der beiden Platten (5, 6) in den Schnittpunkten zu isolieren, wenn die beiden Platten sich im Kontakt zueinander befinden und die Schnur (C) im Kanal (9) in einer ersten Anordnung zur Vorbereitung des nächsten Schnurknotens gewunden ist; und
das Anziehen des Knotens durch Entfernen der Platten (5, 6) und Spannen der Schnur (C) erreicht wird, die aus dem Kanal (9) durch elastisches Biegen der Trennwände austritt.

## Revendications

1. Groupe de nouage, disposé le long d'une ligne d'usinage de produits de forme essentiellement allongée (A), enroulés dans une gaine (B), comprenant :
- au moins un distributeur (2) de fil (C), adapté au nouage d'au moins un bord saillant de la gaine (B), et
- un curseur (3) pour l'envoi du produit (A) enroulé dans la gaine (B) à un poste de travail (4) relié au dit distributeur (2), ledit poste de travail (4) comprenant :
- au moins un compartiment pour le logement du produit (A),
- un circuit pneumatique, adapté à l'entrainement du fil (C) et à son conséquent pliage autour du dit compartiment, pour la formation et le serrage d'un noeud autour du bord saillant de la gaine (B), et
- une paire de plaques (5, 6) réciproquement vis à vis, conjointes et traversées par un conduit (7), qui constitue ledit compartiment et disposé le long de ladite ligne d'usinage,
**caractérisé en ce que**
- lesdites plaques (5, 6) ont des faces (5a, 6a) réciproquement vis à vis comprenant une pluralité de rainures (10) connectées séquentiellement, de façon à définir une canalisation (9),
- ledit circuit pneumatique comprenant une unité pneumatique (8), pour l'entrainement du fil (C) le long de la canalisation (9) formée à l'intérieur des dites plaques (5, 6) et à l'extérieur du dit conduit (7),
- des séparateurs adaptés (12) comprenant des éléments laminaires élastiquement mobiles, disposés en correspondance des rainures (10) d'au moins l'une des deux faces (5a, 6a) des plaques, sur des points d'intersection entre les sections vis à vis de ladite canalisation (9), de façon à isoler les rainures (10) des deux plaques sur les points d'intersection lorsque les deux plaques sont en contact entre elles et le fil est plié autour de la canalisation (9) dans une première configuration de prédisposition au nouage successif du fil ; lesdits séparateurs (12) étant aptes à permettre la sortie du fil (C) depuis la canalisation (9) moyennant le pliage élastique des séparateurs (12), lorsque les plaques (5, 6) sont écartées et le fil (C) est tendu dans une seconde configuration de nouage, pour obtenir le serrage du noeud autour de la gaine (B).

2. Groupe de nouage, selon la revendication 1, **caractérisé en ce qu'**il comprend des moyens tendeurs, agissant sur les extrémités du fil (C), pour diriger le serrage autour du bord saillant de la gaine (B), et permettre le passage de ladite première configuration à ladite seconde configuration.

3. Groupe de nouage, selon la revendication 1, **caractérisé en ce que** ledit curseur (3) est essentiellement constitué d'un patin (13) mobile le long d'un premier segment de ladite ligne d'usinage pour transférer le produit (A) depuis un poste de chargement jusqu'à pratiquement ledit conduit (7) formé à l'intérieur des plaques (5, 6).

4. Groupe de nouage, selon une ou plusieurs des revendications précédentes, **caractérisé en ce qu'**il comprend un manchon (16), mobile le long de ladite ligne d'usinage, en position pratiquement opposée au dit patin (13), ledit manchon (16) présentant une section essentiellement complémentaire à celle du dit conduit (7) et apte à recevoir le fil (C) disposé dans ladite première configuration sur ses surfaces extérieures (16a) en correspondance de l'écartement réciproque des plaques (5, 6) lors du mouvement successif d'éloignement du dit manchon (16) du dit patin (13) amenant le fil (C) à glisser le long des dites surfaces extérieures (16a) du dit manchon (16) jusqu'à glisser le long d'un évasement défini en correspondance d'une zone terminale (16b), pour le transfert du fil (C) à une extrémité conique (13a) du dit patin (13), la conicité de ladite extrémité conique (13a) permettant le déplacement définitif du fil (C) autour du bord saillant de la gaine (B).

5. Groupe de nouage, selon une ou plusieurs des revendications précédentes, **caractérisé en ce qu'**il comprend des moyens de coupure et prélèvement (17) de la gaine (B), associés opérationnellement au dit patin (13) pour permettre le retrait de la gaine (B) en excès pendant les opérations de nouage.

6. Groupe de nouage, selon une ou plusieurs des revendications précédentes, **caractérisé en ce qu'**il comprend un organe de coupure (23), pratiquement actionnable en correspondance de ladite seconde configuration, pour couper le fil (C) en amont de la gaine (B) et permettre l'avancement du produit (A) vers le poste de déchargement.

7. Groupe de nouage, selon la revendication 1, **caractérisé en ce qu'**il comprend des moyens de prise (26) du produit (A), préférablement du type pneumatique, pour le prélèvement du produit (A) depuis ledit conduit (7) et son déplacement le long d'un second segment de ladite ligne d'usinage, jusqu'à un poste de décharge.

8. Groupe de nouage, selon une ou plusieurs des revendications précédentes, **caractérisé en ce qu'**il comprend un appareil pour le perçage du produit (A) et de la gaine (B), ledit appareil étant disposé le long du dit second segment de ladite ligne d'usinage pour le perçage automatique pendant le déplacement du produit (A) par lesdits moyens de prise (26).

9. Procédure de nouage, notamment pour des produits de forme essentiellement allongée (A) enroulés dans une gaine (B) et mobiles le long d'une ligne d'usinage équipée d'un groupe de nouage (1), qui comprend les étapes suivantes :
a. alimenter un poste de travail (4) du dit groupe (1) avec un fil (C) fourni par un distributeur (2) et adapté au nouage d'au moins un bord saillant de la gaine (B) ;
b. envoyer moyennant un curseur (3) le produit (A) enroulé dans la gaine (B) à un compartiment formé dans ledit poste de travail (4) ;
c. entrainer le fil (C) moyennant un circuit pneumatique pour le conséquent pliage du fil (C) autour du dit compartiment ;
d. former et serrer le noeud autour du bord saillant de la gaine (B),
**caractérisée en ce que**
le fil (C) est entrainé dans une canalisation (9) obtenue par une pluralité de rainures (10) séquentiellement connectées réalisées dans des plaques (5, 6) ayant des faces (5a, 6a) mutuellement vis à vis,
- la formation du noeud est obtenue moyennant des séparateurs adaptés (12) comprenant des éléments lamellaires élastiquement mobiles disposés le long des dites rainures (10) d'au moins une des dites faces (5a, 6a) des plaques, sur des points d'intersection entre des segments opposés de ladite canalisation (9), aux fins d'isoler les rainures (10) des deux plaques (5, 6) sur les points d'intersection, lorsque les deux plaques sont en contact entre elles et le fil (C) est plié dans la canalisation (9) dans une première configuration de prédisposition au nouage successif du fil ; et
le serrage du noeud est obtenu en écartant les plaques (5, 6) et en tendant le fil (C) sortant de la canalisation (9) moyennant pliage élastique des séparateurs (12).
